# EUROPÄISCHE PATENTSCHRIFT

(11) **EP 3 512 715 B1**
(45) Veröffentlichungstag und Bekanntmachung des Hinweises auf die Patenterteilung: **13.05.2020**
(21) Anmeldenummer: 17764540.5
(22) Anmeldetag: 04.09.2017
(51) Int. Cl.: B60B 33/00, B60B 33/04, B60R 19/00

(54) **ROLLE**
ROLLER
GALET

(30) Priorität: 14.09.2016 DE 202016105121 U
(43) Veröffentlichungstag der Anmeldung: 24.07.2019
(73) Patentinhaber: Tente GmbH & Co. KG, 42929 Wermelskirchen (DE)
(72) Erfinder: ULRICH, Dietmar, 42929 Wermelskirchen (DE)
(74) Vertreter: Müller, Enno
(86) Internationale Anmeldenummer: PCT/EP2017/072053
(87) Internationale Veröffentlichungsnummer: WO 2018/050463

(56) Entgegenhaltungen:
- EP-A1- 2 743 038
- DE-A1- 2 839 344
- US-A- 2 483 241
- US-A- 3 184 783
- US-A1- 2013 097 808
- US-B1- 9 108 462

## Beschreibung

### Gebiet der Technik

Die Erfindung betrifft eine Rolle mit einem Rad und einer Gabel nach den Merkmalen des Oberbegriffs des Anspruchs 1.

### Stand der Technik

Rollen der in Rede stehenden Art sind bekannt. Diese finden insbesondere Anwendung an Verfahrwagen, wie bspw. von Hand verfahrbare Lastenwagen oder auch Krankenbetten. Solche Rollen können bspw. zum Schutze eines Benutzers vor einem Überfahren der Füße, aber auch zum Schutz der Rolle vor Beschädigungen, mit einem Umfassungsteil versehen sein.

Ein solches Umfassungsteil ist bspw. aus der WO 2014/202454 A1 bekannt.

Aus der EP 2 743 038 A1 ist eine Anordnung zur Überwindung eines Fahrhindernisses an einer Rolle bekannt, die aus einem hinsichtlich seiner Bewegung zwangsgesteuerten und in sich starren Teil besteht, wobei die Steuerung mittels eines an dem Chassis angelenkten Lenkers gegeben ist. Aus der DE 28 39 344 A1 ist eine Rolle mit einem starren Fußschutz bekannt, die aus einem vertikal verstellbaren, die Rolle horizontal umgebenden Ringteil besteht.

### Zusammenfassung der Erfindung

Ausgehend von dem dargelegten Stand der Technik beschäftigt sich die Erfindung mit der Aufgabenstellung, eine Rolle der genannten Art bei günstigem Aufbau mit einem vorteilhaften Umfassungsteil auszubilden.

Diese Aufgabe ist beim Gegenstand des Anspruchs 1 gelöst, wobei darauf abgestellt ist, dass der bewegbare Abschnitt des Umfassungsteils federnd angeordnet ist oder unmittelbar aus einer Feder oder einem Federmaterial gebildet ist, als rückstellfähiger Abschnitt des Umfassungsteils, und dass der bewegliche Abschnitt gegenüber einem weiteren Teil des Umfassungsteils verschwenkbar ausgebildet ist mit einer raumparallel zu der Radachse und quer gerichtet zur üblichen Verfahrrichtung der Rolle ausgerichteten Verschwenkachse.

Durch die vorgeschlagene Ausgestaltung ist eine Rolle mit einem Umfassungsteil angegeben, bei welchem das Umfassungsteil in der Lage ist, bei Kollisionen gänzlich oder mit einem Teilabschnitt auszuweichen. Eine solche Auslösung kann bspw. erreicht werden, wenn die Rolle aus einer horizontalen Ebene heraus gegen eine ansteigende Ebene verfahren wird. Hierbei kann der in Verfahrrichtung vorragende Abschnitt des Umfassungsteils ggf. gegen die ansteigende Bodenfläche stoßen. Der betreffende Abschnitt oder auch das gesamte Umfassungsteil kann sich zufolge der vorgeschlagenen Erfindung aus der Kollisionsstellung heraus bewegen, dies, ggf. überlagert zu einer horizontalen Bewegungskomponente, in vertikaler Richtung.

Das Umfassungsteil umfasst die Rolle zumindest die erste Seite und im Übergriff die zweite Seite, weiter bevorzugt die Rolle in der Umfangsebene gänzlich umgreifend. Das Umfassungsteil ist weiter so ausgelegt, dass die Rolle innerhalb des bspw. rahmenartig sich in der Umfangsebene erstreckenden Umfassungsteiles um die Radachse frei drehbar ist.

Die Umfassungsebene des Umfassungsteils kann, wie bevorzugt, bei Abrollen des Rades auf einer Bodenfläche parallel zu dieser Fläche verlaufen. Das Umfassungsteil kann eine untere Randkante aufweisen, die in einer Seitenansicht, in der sich die Radachse als Punkt abbildet, zu der ersten Seite hin ansteigt. Die Rolle ist durch die vorgeschlagene Lösung insbesondere hinsichtlich der Ausgestaltung des Umfassungsteils in vorteilhafter Weise weitergebildet. Mittels des Umfassungsteiles ist insbesondere ein Übergang im Zuge der Nutzung der Rolle, bspw. bei Abrollen über eine horizontal ebene Fläche in eine hierzu ansteigende Fläche, einer Kollision des Umfangsteiles mit der ansteigenden Bodenfläche entgegengewirkt, dies zumindest bis hin zu einem üblichen Steigerungswinkel von bspw. 5 oder 10°. Der Anstieg der unteren Randkante nach außen in Richtung zu der ersten Seite ist hierbei bevorzugt so gewählt, dass sich ein im Bereich der ersten Seite ergebendes Abstandsmaß zwischen der Unterkante und einer Bodenoberfläche, auf welcher die Rolle abrollt, einstellt, das im Sinne der Funktion eines Umfassungsteiles geringer gewählt ist als eine übliche Fußhöhe, so dass trotz des Randkantenanstiegs weiterhin das Umfassungsteil als Fußabweiser zum Schutz des Benutzers vor Überfahren des Fußes dient.

Das Umfassungsteil kann sowohl eine hin zur ersten Seite ansteigende Randkante aufweisen. Es ist in Teilabschnitten bewegbar.

Der bewegbare Abschnitt des Umfassungsteiles ist federnd angeordnet oder unmittelbar aus der Feder bzw. dem Federmaterial gebildet. In günstiger Ausgestaltung ergibt sich so ein rückstellfähiger Abschnitt des Umfassungsteiles, der nach Aufhebung der Beanspruchung infolge einer Kollision o. dgl. sich wieder in die Ausgangsstellung zurück verlagert.

So kann das Umfassungsteil zumindest teilweise und bezüglich seiner Außenfläche aus einem elastisch nachgiebigen Material ausgebildet sein. Das elastisch nachgiebige Material kann ein Gummimaterial oder auch ein thermoplastisches Material sein.

Der bewegliche Abschnitt ist auch gegenüber dem weiteren Teil des Umfassungsteils verschwenkbar ausgebildet. Es ist hierzu eine Verschwenkachse ausgerichtet an der Radachse gegeben. Diese Verschwenkachse ist raumparallel zur Radachse ausgerichtet und quergerichtet zur üblichen Verfahrrichtung der Rolle.

Die Verschwenkachse kann durch bauliche Mittel gegeben sein. Auch kann gemäß einer möglichen Ausgestaltung die Verschwenkachse als rein geometrische Achse vorhanden sein, bspw. im Bereich eines entsprechend ausgebildeten Schwenkabschnittes des Umfassungsteiles.

Das Umfassungsteil kann jedenfalls in Überdeckung zu der zweiten Seite als Stahlteil ausgebildet sein. Ein solches Stahlteil kann, wie auch bevorzugt, an der Rolle bzw. an der Gabel der Rolle starr befestigt sein. Das Stahlteil, bzw. die in Verfahrrichtung beidseitig des Rades vorgesehenen Stahlteile bieten einen ausreichenden Schutz des Rades vor Beschädigung durch äußere Einflüsse in Richtung auf die zweite Seite des Rades.

Der bewegbare Abschnitt kann mit Bezug auf eine untere Randkante des Umfassungsteiles in einer Ansicht auf die zweite Seite mit Bezug auf einen unmittelbar anschließenden weiteren Abschnitt des Umfassungsteiles diesen nach unten überragen. Das Maß, mit welchem ein Abschnitt den unmittelbar anschließenden weiteren Abschnitt in Richtung auf die Randkante überragt, kann dem 0,5- bis 0,9-Fachen der gesamten wirksamen, senkrecht zur Umfangsebene betrachteten Höhe des Umfassungsteiles entsprechen, ggf. unter Nichtberücksichtigung etwaiger über dieses Höhenmaß hinausragender Befestigungsbereiche.

Die nach unten gegenüber den benachbarten Abschnitten überragenden Abschnitte sind bevorzugt solche, die die erste Seite des Rades überdecken und weiter bevorzugt bewegbar angeordnet bzw. ausgebildet sind.

So kann das Umfassungsteil zwei den zweiten Seiten zugeordnete Schürzenteile aufweisen, an welchen ein oder mehrere, die bewegbaren Abschnitte aufweisende weitere Teile, die jedenfalls eine erste Seite umfassen, befestigt sind. Die Schürzenteile sind in einer möglichen Ausgestaltung den Stahlteilen zugewandt zugeordnet. Auch kann eine Befestigung des Umfassungsteiles im Bereich der Schürzenteile mit den Stahlteilen vorgesehen sein.

Das Umfassungsteil kann ein umfangsmäßig geschlossen ausgebildetes Teil sein, dies mit Bezug auf einen Grundriss auf das Umfassungsteil, in welchem Grundriss sich die geometrische Radachse als Linie abbildet. So kann das Umfassungsteil in einer beispielhaften Ausgestaltung insgesamt einen ovalförmigen Grundriss aufweisen, mit einer im Grundriss betrachteten längeren Erstreckung in Verfahrrichtung und einer kürzeren Erstreckung quergerichtet zu der Verfahrrichtung bzw. gleichgerichtet zur Radachse.

Der weitere Abschnitt kann als Gummi- oder Elastomerteil ausgebildet sein. In einer bevorzugten Ausgestaltung sind die beweglichen Abschnitte und die weiteren Abschnitte einstückig und materialeinheitlich ausgebildet.

Weiter kann der weitere Abschnitt bezogen auf eine zweite Seite und bezogen auf das Stahlteil radabgewandt vorkragend ausgebildet sein. Mit Bezug auf den Grundriss erstreckt sich der weitere Abschnitt entsprechend mit Abstand zu der zugewandten Lauffläche des Rades, wie auch zu den Stahlteilen des Umfassungsteils.

Die Schwenkachse des beweglichen Abschnitts kann durch einen Verjüngungsbereich in dem weiteren Abschnitt ausgebildet sein. Es kann sich hierbei um einen materialverdünnten Bereich handeln oder auch um die Anordnung einer entsprechend positionierten Ausnehmung, so dass sich durch die gegebene Schwächung ein Schwenkbereich mit einer geometrischen Schwenkachse einstellt.

Das Umfassungsteil kann mit einer die Radachse bildenden, das Rad durchsetzenden Schraube an der Rolle befestigbar sein. Entsprechend ist das Umfassungsteil in handhabungstechnisch günstiger Weise anordbar bzw. auch entfernbar.

### Kurze Beschreibung der Zeichnungen

Nachstehend ist die Erfindung anhand der beigefügten Zeichnung, welche lediglich ein Ausführungsbeispiel darstellt, näher erläutert. Es zeigt:
- Fig. 1: eine Rolle mit einem Umfassungsteil in perspektivischer Darstellung;
- Fig. 2: die Rolle in einer Ansicht gegen eine erste Seite des Rades;
- Fig. 3: die Rolle in Draufsicht;
- Fig. 4: die Rolle in Seitenansicht im Zuge einer Verfahrbewegung der Rolle auf einer horizontalen Fläche;
- Fig. 5: eine der Figur 4 entsprechende Darstellung, jedoch eine Verfahrbewegung betreffend im Übergangsbereich von einer abschüssigen Fläche in eine horizontale Fläche;
- Fig. 6: eine der Figur 5 entsprechende Darstellung, jedoch den Übergangsbereich von einer horizontalen Fläche in eine ansteigende Fläche betreffend;

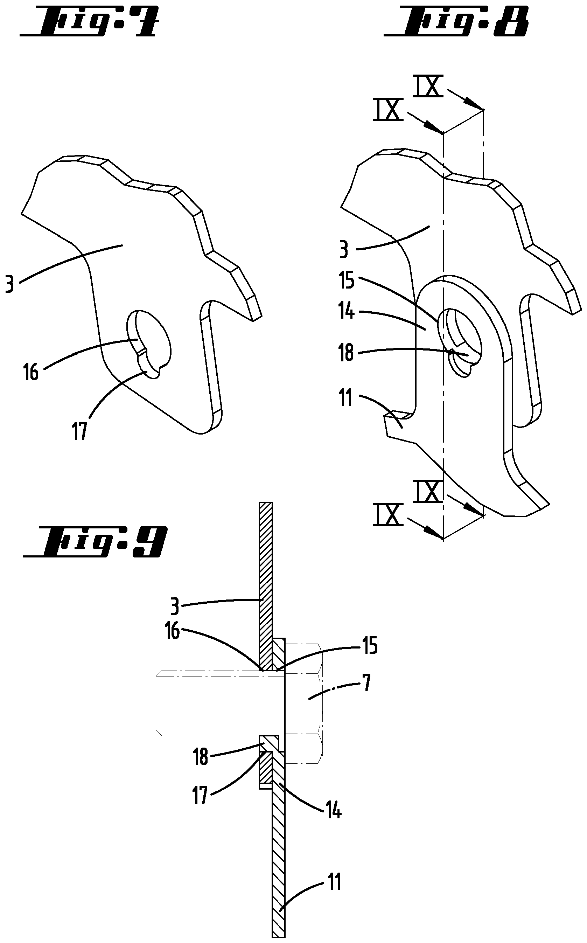

- Fig. 7: eine perspektivische Detaildarstellung eines Gabelbereiches;
- Fig. 8: den Gabelbereich gemäß Figur 7 nach Ansetzen des Umfassungsteiles zum Befestigen desselben an der Gabel;
- Fig. 9: den Schnitt gemäß dem Bereich IX in Figur 8;
- Fig. 10: das Umfassungsteil in Einzeldarstellung, betreffend eine Draufsicht;
- Fig. 11: die Seitenansicht hierzu;
- Fig. 12: die Unteransicht gegen das Umfassungsteil;

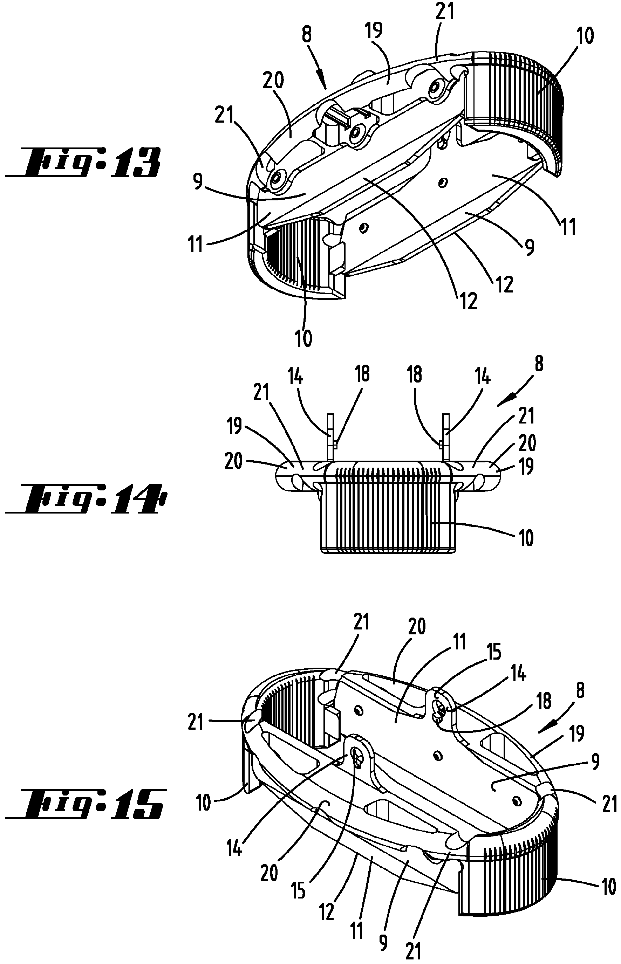

- Fig. 13: eine perspektivische Unteransicht gegen das Umfassungsteil;
- Fig. 14: eine weitere Ansichtsdarstellung des Umfassungsteiles mit Blick auf einen beweglichen Abschnitt;
- Fig. 15: eine perspektivische Draufsicht auf das Umfassungsteil.

### Beschreibung der Ausführungsformen

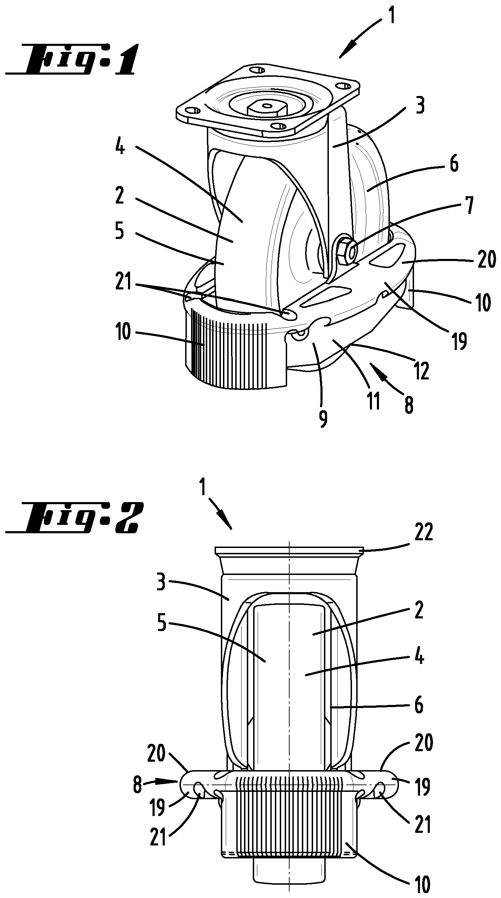

Dargestellt und beschrieben ist, zunächst mit Bezug zu Figur 1, eine Rolle 1 mit einem Rad 2 und einer das Rad 2 tragenden Gabel 3.

Das Rad 2 ist übergriffen von der Gabel 3 und an der Gabel 3 um eine Radachse x drehbar gehaltert.

Die Gabel 3 ist mit einer Montageplatte 22 versehen, zur Befestigung der Rolle 1 an einem zu verfahrenden Gegenstand 23.

Bei üblicher Nutzung der Rolle 1 erstreckt sich die Radachse x bevorzugt in einer Horizontalen. Mit Bezug zu der Radachse x umlaufend weist das Rad 2 eine Lauffläche 4 auf. Letztere weist in eine übliche Verfahrrichtung r und bildet eine erste Seite 5. Quer betrachtet zur Verfahrrichtung r erstreckt sich eine zweite Seite 6 des Rades 2. Diese kann der den Nabenkörper im Bereich der Radachse x bildenden bzw. mit ausformenden Seitenwand des Rades 2 entsprechen.

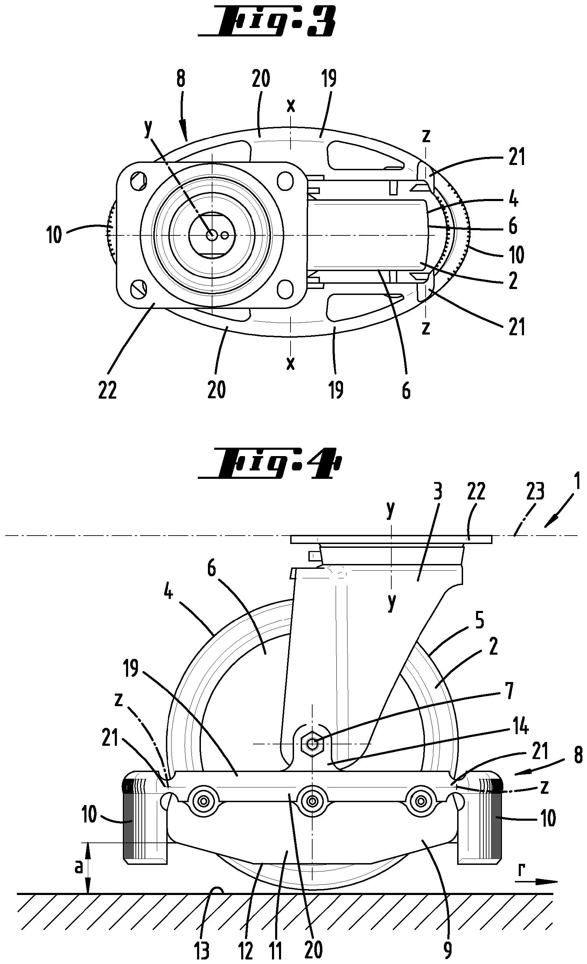

Es ergibt sich im Nutzungszustand gemäß der in Figur 4 dargestellten Form eine Vertikale y, die in einer möglichen Ausgestaltung der Rolle 1 als Lenkrolle zugleich auch die Lenkachse darstellen kann.

Das Rad 2 ist mittels einer das Rad 2 durchsetzenden und beidseitig der gabelseitigen Schenkel gefassten Schraube 7 befestigt. Diese Schraube 7 bildet zugleich auch die Radachse.

Es ist ein Umfassungsteil 8 vorgesehen. Dieses ist als gesondertes Teil an der Rolle 1 befestigt, insbesondere unter Nutzung der Gabel-Rad-Verschraubung.

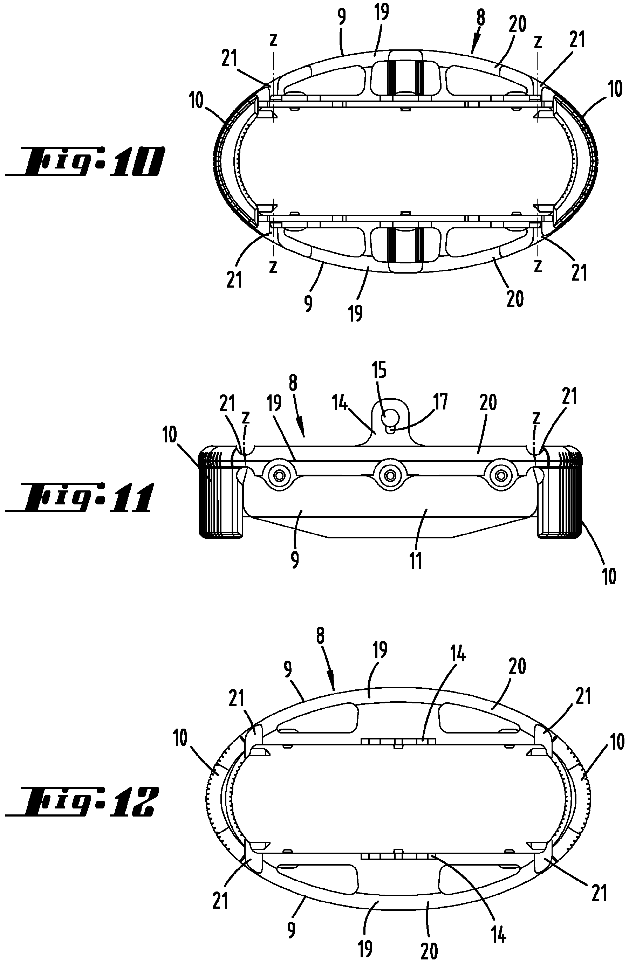

Das Umfassungsteil 8 erstreckt sich insgesamt rahmenartig, weiter bevorzugt im Grundriss umfangsmäßig geschlossen. Wie insbesondere aus der Draufsicht-Darstellung in Figur 10 zu erkennen, ergibt sich ein insgesamt ovalförmiger Grundriss des Umfassungsteiles 8. Mit Bezug auf einen Grundriss gemäß Figur 3 ergibt sich mit Bezug auf die dem Umfassungsteil 8 zugewandten Flächen des Rades 2 eine umlaufende Beabstandung zu den Radflächen, so dass das Rad 2 auch bei angeordnetem Umfassungsteil 8 ordnungsgemäß und störungsfrei ablaufen kann.

Im Wesentlichen weist das Umfassungsteil 8 zwei, den zweiten Seiten 6 des Rades 2 zugeordnete Schürzenteile 9 auf. Diese erstrecken sich mit Bezug auf einen Grundriss im Wesentlichen die zweiten Seiten 6 flankierend und gehen spitzenseitig in Verfahrrichtung r bzw. entgegen Verfahrrichtung r über in, die erste Seite 5 des Rades 2 im Grundriss überdeckende Abschnitte 10.

Die Schürzenteile 9 sind zunächst im Wesentlichen gebildet durch plattenförmige Stahlteile 11. Diese erstrecken sich mit Abstand in Erstreckungsrichtung der Radachse x seitlich zu den zweiten Seiten des Rades 2, mit einer nach unten weisenden Randkante 12. Diese Randkante 12 definiert in der dargestellten Ausführungsform in Nutzungsstellung der Rolle 1 den freien vertikalen Abstand a zu der zu befahrenden Bodenfläche 13. In einer möglichen Ausgestaltung beträgt dieser geringste Abstand a, welcher sich bevorzugt auch im Bereich der Abschnitte 10 einstellt, 15 bis 25 mm, weiter bspw. etwa 20 mm, wie etwa 19 mm.

In Verfahrrichtung r bzw. entgegen Verfahrrichtung r steigt die Randkante 12 mit Bezug auf eine Seitenansicht gemäß Figur 4 in Richtung auf die anschließenden Abschnitte 10 bzw. der diesbezüglichen Enden der Stahlteile 11 an, unter Einschluss eines spitzen Winkels zu einer den unteren Randkantenbereich berührenden Ebene von etwa 5 bis 10°. So ergibt sich in bzw. entgegen Verfahrrichtung r jeweils endseitig des Stahlteiles 11 ein Abstand a' zur Bodenfläche 13, der etwa dem 1,5- bis 2-Fachen des geringsten Abstandsmaßes a entspricht.

Die in Verfahrrichtung r betrachtete Länge des Stahlteiles 11 kann etwa dem Durchmesser des Rades 2 entsprechen.

Abgewandt der Randkante 12 und entsprechend nach oben gerichtet ist an jedem Stahlteil 11 eine Lasche 14 angeformt. Diese dient zur Befestigung des Umfassungsteils 8 an der Rolle 1.

Jede Lasche 14 weist eine bohrungsartige Durchsetzungsöffnung 15 auf, die durchmessermäßig bevorzugt angepasst ist an eine entsprechende Bohrung 16 in der Gabel 3.

Die Öffnung 15 der Bohrung 16 sind zur Befestigung des Umfassungsteils 8 an der Rolle 1 in Überdeckung zu bringen.

Darüber hinaus ist die Bohrung 16 in der Gabel schlüssellochartig ausgebildet, mit einem radialen Erweiterungsbereich 17. In diesen tritt in Zuordnungsstellung ein der Gabel 3 zugewandter, entsprechend benachbart zu der Durchsetzungsöffnung 15 ausgebildeter Vorsprung 18 ein. In Verbindung mit einer Befestigung durch die auch das Rad 2 halternde Schraube 7 ist so das Umfassungsteil 8 auch drehfest bezüglich der Radachse x an der Rolle 1 befestigt.

Die drehfeste Befestigung bedeutet entsprechend eine Verdrehsicherung. Im Zuge der Montage ist durch den radialen Erweiterungsbereich 17 und den Vorsprung 18 auch zugleich eine Ausrichthilfe gegeben.

Die Stahlteile 11 bilden im Wesentlichen Grundträger für weitere Abschnitte des Umfassungsteils 8. So ist weiter an den Stahlteilen 11 ein im Grundriss umfangsmäßig geschlossen ausgebildeter weitere Abschnitt 19 befestigt. Dieser weitere Abschnitt 19 ist grundrissmäßig formgebend für das Umfassungsteil 8 und besteht in einer möglichen, auch bevorzugten, Ausbildung aus einem Gummi- oder Elastomer-Werkstoff.

Der weitere Abschnitt 19 erstreckt sich im Bereich der Stahlteile 11, d.h. zugewandt der zweiten Seite 6 des Rades 2, brückenartig mit vertikalem Abstand zu der durch die Stahlteile 11 gegebenen unteren Randkante 12. Dieser brückenartige Abschnitt erstreckt sich bezüglich der zweiten Seite 6 und auch der Stahlteile 11 vorkragend, mit Bezug auf einen Grundriss entlang einer Kreisabschnittlinie.

Zufolge einer Verschraubung zwischen den so geformten Brückenabschnitten 20 und den Stahlteilen 11 ist der weitere Abschnitt 19 befestigt. Es ergibt sich so ein insgesamt stabiles, umlaufend entlang des weiteren Abschnittes 19 stoßelastisch abfederndes Umfassungsteil 8. Die vorgesehenen Stahlteile 11 schützen das Rad 2 auch gegen stärkere Belastungen, die in Richtung auf die zweite Seite 6 einwirken können.

Die Brückenabschnitte 20 gehen über in die beweglichen Abschnitte 10. Diese beweglichen Abschnitte 10 verlaufen ebenfalls jeweils entlang einer Kreisbogenlinie, die jedoch im Vergleich zu der der Brückenabschnitte 20 einen wesentlich geringeren Radius aufweist.

Die weiteren Abschnitte 10 erstrecken sich ausgehend von den Brückenabschnitten 20 nach unten in Richtung auf die zu befahrende Bodenfläche 13 und schließen in bevorzugter Ausgestaltung ebenenmäßig auf Höhe der unteren Randkante 12 der Stahlteile 11 ab. Es ergibt sich so jeweils in Verfahrrichtung r bzw. entgegen Verfahrrichtung r ein schürzenartiger Abschnitt 10, der die erste Seite des Rades 2 schiffsbugartig überdeckt.

Im Übergangsbereich jeweils vom Brückenabschnitt 20 in den in Umfangsrichtung nachfolgenden bzw. vorgeordneten Abschnitt 10 ist ein Verjüngungsabschnitt 21 ausgebildet, dies insbesondere durch mit Bezug auf eine Seitenansicht gemäß Figur 11 ober- und unterseitig des Brückenabschnitts 20 im Übergangsbereich zum Abschnitt 10 vorgenommene Ausnehmungen. Es ergibt sich so eine Einschnürung des Materials in diesem Bereich, wobei die Verjüngungsabschnitte 21 eines Abschnittes 10 mit Bezug auf eine Draufsicht gemäß Figur 10 eine Schwenkachse z für den Abschnitt 10 bilden, welche Schwenkachse z bevorzugt parallel verläuft zu der Radachse x und somit quergerichtet zu der üblichen Verfahrrichtung r.

Zufolge dieser Ausgestaltung ist jeder Abschnitt 10 geeignet, bei entsprechender Beaufschlagung um die Schwenkachse z auszuweichen, wobei im Zuge dieses Ausweichens eine Bewegung des Abschnittes 10 auch mit einer vertikalen Bewegungskomponente gegeben ist. Zufolge der elastischen Rückstellfähigkeiten des gewählten Materials von Abschnitt 10 und Brückenabschnitten 20 fällt der Abschnitt 10 bei Fortfall der äußeren Beeinflussung wieder in seine Ursprungsstellung gemäß der Darstellung in Figur 4 zurück.

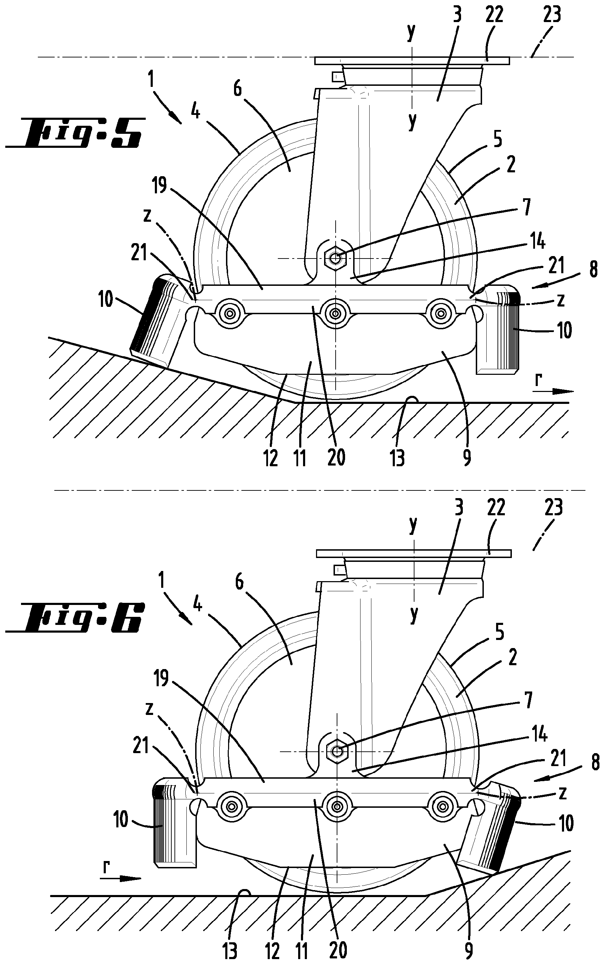

Figur 5 zeigt eine mögliche Auslenkung eines Abschnittes 10 bei einer Überfahrt von einer abfallenden Bodenfläche 13 in eine horizontale Bodenfläche 13. Der betreffende in Verfahrrichtung r hintere Abschnitt 10 schwenkt um die Schwenkachse z entgegen der Verfahrrichtung r aus, mit Bezug zu der Darstellung in Figur 5 nach außen.

Auch ein Einschwenken eines Abschnittes 10 nach innen, in Richtung auf die Lauffläche des Rades 2 weisend, kann erreicht werden, bspw. bei einem Anlaufen aus einer horizontalen Bodenfläche 13 in eine ansteigende Bodenfläche gemäß der Darstellung in Figur 6.

Wie insbesondere aus der Draufsicht-Darstellung in Figur 10 zu erkennen, ergibt sich bezüglich des Umfassungsteiles 8 eine doppelsymmetrische Ausgestaltung mit Bezug auf eine mittige Längsachse, wie auch mit Bezug auf eine mittige Querachse.

| | | | |
|---|---|---|---|
| 1 | Rolle | | |
| 2 | Rad | | |
| 3 | Gabel | | |
| 4 | Lauffläche | | |
| 5 | erste Seite | | |
| 6 | zweite Seite | a | Abstand |
| 7 | Schraube | a' | Abstand |
| 8 | Umfassungsteil | r | Verfahrrichtung |
| 9 | Schürzenteil | x | Radachse |
| 10 | Abschnitt | y | Vertikale |
| 11 | Stahlteil | z | Schwenkachse |
| 12 | Randkante | | |
| 13 | Bodenfläche | | |
| 14 | Lasche | | |
| 15 | Durchsetzungsöffnung | | |
| 16 | Bohrung | | |
| 17 | Erweiterungsbereich | | |
| 18 | Vorsprung | | |
| 19 | weiterer Abschnitt | | |
| 20 | Brückenabschnitt | | |
| 21 | Verjüngungsabschnitt | | |
| 22 | Montageplatte | | |
| 23 | Gegenstand | | |

## Patentansprüche

1. Rolle (1) mit einem Rad (2) und einer Gabel (3), wobei das Rad (2) eine erste Seite (5) aufweist, die sich in Verfahrrichtung (r) oder entgegen der Verfahrrichtung (r) erstreckt, und eine zweite Seite (6), die sich quer zur Verfahrrichtung (r) erstreckt, wobei weiter das Rad (2) von einem an der Gabel (3) befestigten Umfassungsteil (8) umgeben ist, das Umfassungsteil (8) das Rad (2) jedenfalls auf der ersten Seite (5) und mit einem Übergriff auf die zweite Seite (6) in einer Umfangsebene, die senkrecht zu einer im üblichen Betrieb der Rolle (1) durch die Gabel (3) verlaufenden Vertikalen (y) verläuft, umgibt, wobei weiter ein bewegbarer Abschnitt (10) des Umfassungsteils (8) relativ zu der Gabel (3) mit einer vertikalen Bewegungskomponente bewegbar ist, **dadurch gekennzeichnet, dass** der bewegbare Abschnitt (10) des Umfassungsteils (8) federnd angeordnet ist oder unmittelbar aus einer Feder oder einem Federmaterial gebildet ist, als rückstellfähiger Abschnitt des Umfassungsteils (8), und dass der bewegliche Abschnitt (10) gegenüber einem weiteren Teil des Umfassungsteils (8) verschwenkbar ausgebildet ist mit einer raumparallel zu der Radachse und quer gerichtet zur üblichen Verfahrrichtung der Rolle (1) ausgerichteten Verschwenkachse (z).

2. Rolle nach Anspruch 1, **dadurch gekennzeichnet, dass** das Umfassungsteil (8) eine untere Randkante (12) aufweist, die in einer Seitenansicht, in der sich die Radachse (x) als Punkt abbildet, zu der erste Seite (5) hin ansteigt.

3. Rolle nach einem der vorhergehenden Ansprüche, **dadurch gekennzeichnet, dass** der bewegliche Abschnitt (10) aus einem Gummimaterial oder einem thermoplastischen Material besteht.

4. Rolle nach einem der vorhergehenden Ansprüche, **dadurch gekennzeichnet, dass** das Umfassungsteil (8) jedenfalls in Überdeckung zu der zweiten Seite (6) als Stahlteil (11) ausgebildet ist.

5. Rolle nach einem der vorhergehenden Ansprüche, **dadurch gekennzeichnet, dass** der bewegbare Abschnitt (10) mit Bezug auf eine untere Randkante (12) des Umfassungsteils (8) in einer Ansicht auf die zweite Seite (6) mit Bezug auf einen unmittelbar anschließenden weiteren Abschnitt (19) des Umfassungsteils (8) diesen nach unten überragt.

6. Rolle nach Anspruch 5, **dadurch gekennzeichnet, dass** der weitere Abschnitt (19) ein umfangsmäßig geschlossen ausgebildetes Teil ist.

7. Rolle nach einem der vorhergehenden Ansprüche, **dadurch gekennzeichnet, dass** das Umfassungsteil (8) insgesamt einen ovalförmigen Grundriss aufweist.

8. Rolle nach einem der Ansprüche 5 bis 7, **dadurch gekennzeichnet, dass** der weitere Abschnitt (19) als Gummi- oder Elastomerteil ausgebildet ist.

9. Rolle nach einem der Ansprüche 5 bis 8, **dadurch gekennzeichnet, dass** der weitere Abschnitt (19) bezogen auf eine zweite Seite (6) und bezogen auf das Stahlteil (11) radabgewandt vorkragend ausgebildet ist.

10. Rolle nach einem der Ansprüche 5 bis 9, **dadurch gekennzeichnet, dass** die Verschwenkachse (z) des Abschnitts (10) durch einen Verjüngungsbereich (21) in dem weiteren Abschnitt (19) ausgebildet ist.

11. Rolle nach einem der vorhergehenden Ansprüche, **dadurch gekennzeichnet, dass** das Umfassungsteil (8) mit einer die Radachse (x) bildenden, das Rad (2) durchsetzenden Schraube (7) an der Rolle (1) befestigbar ist.

## Claims

1. Roller (1) comprising a wheel (2) and a fork (3), the wheel (2) having a first face (5) which extends in the direction of travel (r) or counter to the direction of travel (r), and a second face (6) which extends transversely to the direction of travel (r), the wheel (2) furthermore being encompassed by an enclosing part (8) fastened to the fork (3), the enclosing part (8) encompassing the wheel (2) at least on the first face (5) and so as to overlap onto the second face (6) in a circumferential plane that extends perpendicularly to a vertical (y) extending through the fork (3) during normal operation of the roller (1), it furthermore being possible to move a movable portion (10) of the enclosing part (8) relative to the fork (3) by means of a vertical movement component, **characterised in that** the movable portion (10) of the enclosing part (8) is spring-mounted or is formed directly from a spring or a spring material as a resilient portion of the enclosing part (8), and **in that** the movable portion (10) is designed to be pivotable relative to a further part of the enclosing part (8) by means of a pivot axis (z) oriented spatially parallel to the wheel axis and transverse to the usual direction of travel of the roller (1).

2. Roller according to claim 1, **characterised in that** the enclosing part (8) has a lower edge (12) which rises towards the first face (5) in a side view in which the wheel axis (x) is shown as a point.

3. Roller according to either of the preceding claims, **characterised in that** the movable portion (10) consists of a rubber material or a thermoplastics material.

4. Roller according to any of the preceding claims, **characterised in that** the enclosing part (8) is designed as a steel part (11) which at least overlaps the second face (6).

5. Roller according to any of the preceding claims, **characterised in that** the movable portion (10), with respect to a lower edge (12) of the enclosing part (8) in a view of the second face (6) with respect to an immediately adjacent further portion (19) of the enclosing part (8), projects downwards beyond said further portion.

6. Roller according to claim 5, **characterised in that** the further portion (19) is a circumferentially closed part.

7. Roller according to any of the preceding claims, **characterised in that** the enclosing part (8) has an oval-shaped plan overall.

8. Roller according to any of claims 5 to 7, **characterised in that** the further portion (19) is designed as a rubber part or an elastomer part.

9. Roller according to any of claims 5 to 8, **characterised in that** the further portion (19) is formed so as to project away from the wheel in relation to a second face (6) and in relation to the steel part (11).

10. Roller according to any of claims 5 to 9, **characterised in that** the pivot axis (z) of the portion (10) is formed by a tapered region (21) in the further portion (19).

11. Roller according to any of the preceding claims, **characterised in that** the enclosing part (8) can be fastened to the roller (1) by means of a screw (7) which forms the wheel axis (x) and passes through the wheel (2).

## Revendications

1. Roulette (1) avec une roue (2) et une fourche (3), dans laquelle la roue (2) présente un premier côté (5) s'étendant dans le sens de déplacement (r) ou à l'encontre du sens de déplacement (r) et un deuxième côté (6) s'étendant transversalement au sens de déplacement (r), dans laquelle en outre la roue (2) est entourée d'une partie d'entourage (8) fixée à la fourche (3), la partie d'entourage (8) entoure la roue (2) au moins sur le premier côté (5) et avec un débordement sur le deuxième côté (6) dans un plan périphérique perpendiculaire à une verticale (y) passant par la fourche (3) en exploitation normale de la roulette (1), dans laquelle en outre une partie mobile (10) de la partie d'entourage (8) est mobile par rapport à la fourche (3) avec une composante de mouvement verticale, **caractérisée en ce que** la partie mobile (10) de la partie d'entourage (8) est agencée de manière élastique ou est directement formée par un ressort ou un matériau élastique, en tant que partie pouvant être rappeler en arrière de la partie d'entourage (8), et **en ce que** la partie mobile (10) est formée pivotante par rapport à une autre partie de la partie d'entourage (8), avec un axe de pivotement (z) orienté dans l'espace parallèlement à l'axe de la roue et dirigé transversalement à la direction normale de déplacement de la roulette (1).

2. Roulette selon la revendication 1, **caractérisée en ce que** la partie d'entourage (8) présente un bord inférieur (12) qui, dans une vue de côté dans laquelle l'axe de la roue (x) est représenté comme un point, monte vers le premier côté (5).

3. Roulette selon l'une des revendications précédentes, **caractérisé en ce que** la partie mobile (10) est constituée d'un matériau en caoutchouc ou d'un matériau thermoplastique.

4. Roulette selon l'une des revendications précédentes, **caractérisé en ce que** la partie d'entourage (8) est réalisée au moins en recouvrement du deuxième côté (6) sous la forme de partie en acier (11).

5. Roulette selon l'une des revendications précédentes, **caractérisé en ce que** dans une vue sur le deuxième côté (6), la partie mobile (10) en référence à un bord inférieur (12) de la partie d'entourage (8), fait, en référence à une autre partie (19) de la partie d'entourage (8) s'y rattachant directement, saillie vers le bas au-delà de cette dernière.

6. Roulette selon la revendication 5, **caractérisée en ce que** l'autre partie (19) est une partie fermée sur le pourtour.

7. Roulette selon l'une des revendications précédentes, **caractérisé en ce que** la partie d'entourage (8) présente globalement un tracé de base de forme ovale.

8. Roulette selon l'une des revendications 5 à 7, **caractérisée en ce que** l'autre partie (19) est réalisée sous la forme d'une partie en caoutchouc ou en élastomère.

9. Roulette selon l'une des revendications 5 à 8, **caractérisée en ce que** par rapport à un deuxième côté (6) et par rapport à la pièce en acier (11), l'autre partie (19) est formée de manière à faire saillie à l'opposé de la roue.

10. Roulette selon l'une des revendications 5 à 9, **caractérisée en ce que** l'axe de pivotement (z) de la partie (10) est formé par une zone amincie (21) dans l'autre partie (19).

11. Roulette selon l'une des revendications précédentes, **caractérisée en ce que** la partie d'entourage (8) peut être fixée à la roulette (1) par une vis (7) formant l'axe de la roue (x) et traversant la roue (2).
